# EUROPEAN PATENT APPLICATION

(11) **EP 2 477 293 A2**
(43) Date of publication of application: **18.07.2012**
(21) Application number: 12150984.8
(22) Date of filing: 12.01.2012
(51) Int. Cl.: H02H 3/08, H02H 3/30, H02H 3/34, H02H 3/093

(54) **Methods and systems involving monitoring circuit connectivity**

(30) Priority: 17.01.2011 US 201113007833
(71) Applicant: General Electric Company, Schenectady, New York 12345 (US)
(72) Inventor: Patel, Khushbu Jay, Louisville, KY Kentucky 40225 (US); Williams, Craig Benjamin, Louisville, KY Kentucky 40225 (US)
(74) Representative: Illingworth-Law, William Illingworth

(57) **Abstract**

A circuit protection system (100) includes a first current sensing device (102) operative to measure a current of a first phase of a voltage source (151), a second current sensing device (102) operative to measure a current of a second phase of a voltage source (153), and a logic portion (110) communicatively connected to the first current sensing device (102) and the second current sensing device (102), the logic portion (110) operative to receive measured currents from the first current sensing device (102) and the second current sensing device (102), determine whether the measured current of the first phase (151) is less than a threshold current value during a time period, and output an indication that a short exists in the first phase of the voltage source (151) responsive to determining that the measured current of the first phase (151) is not less than the threshold current value during the time period.

## Description

### BACKGROUND OF THE INVENTION

The subject matter disclosed herein relates to monitoring circuit connectivity.

Circuit breakers and other electric devices often include circuits that measure current in the devices. For example, current transformers or Rogowski coils may be connected to a circuit and logic processor to monitor the current in a device.

The components in the current measuring circuits may become disconnected or shorted by, for example, improper installation or wear over the lifetime of the electric device resulting in undesirable performance degradation in the device.

### BRIEF DESCRIPTION OF THE INVENTION

According to one aspect of the invention, a circuit protection system includes a first current sensing device operative to measure a current of a first phase of a voltage source, a second current sensing device operative to measure a current of a second phase of a voltage source, and a logic portion communicatively connected to the first current sensing device and the second current sensing device, the logic portion operative to receive measured currents from the first current sensing device and the second current sensing device, determine whether the measured current of the first phase is less than a threshold current value during a time period, and output an indication that a short exists in the first phase of the voltage source responsive to determining that the measured current of the first phase is not less than the threshold current value during the time period.

According to another aspect of the invention, a method for operating a circuit protection device includes receiving a measured current of a first phase of a voltage source over a time period, determining whether the measured current of the first phase of the voltage source is less than a threshold value during the time period, outputting an indication that the first phase of the voltage source is shorted responsive to determining that the measured current of the first phase of the voltage source is not less than the threshold value during the time period.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates a circuit diagram of a circuit protection system.

FIG. 2 illustrates an exemplary block diagram of the processor portion and associated components.

FIGS. 3-7 illustrate examples of sensed currents of the system of FIG. 1.

FIG. 8 illustrates a block diagram of an exemplary method for detecting shorts in the system of FIG. 1.

The detailed description explains embodiments of the invention, together with advantages and features, by way of example with reference to the drawings.

### DETAILED DESCRIPTION OF THE INVENTION

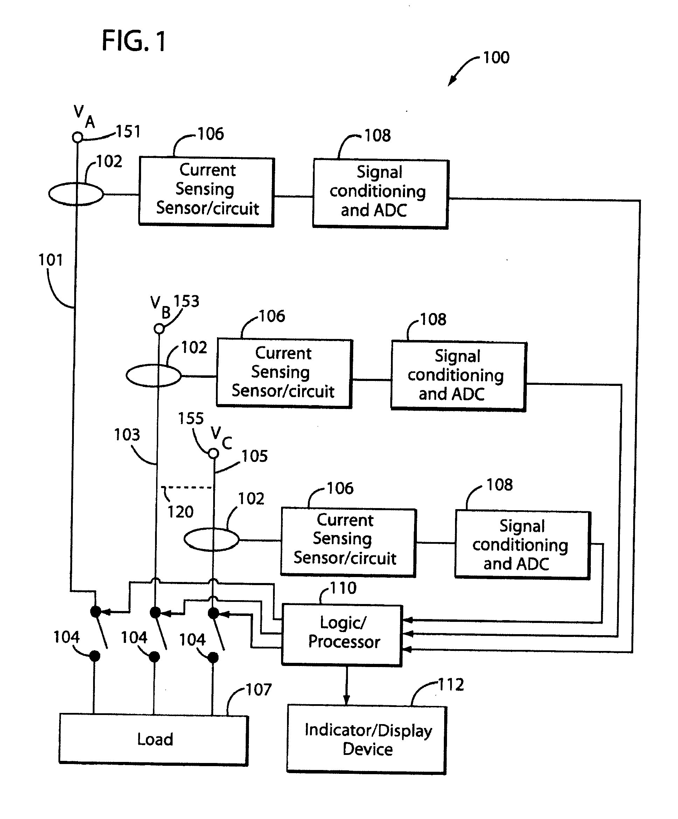

FIG. 1 illustrates block diagram of an exemplary embodiment of a circuit protection (circuit breaker) system 100. The system 100 includes sensing devices 102 that may include for example, a voltage transformer, current transformer, or a Rogowski coil device that is operative to sense current in a proximate line or current path. The sensing devices 102 are disposed proximate to lines 101, 103, and 105 that receive voltage from a multi-phase voltage source having phases A-C (V_{A}, V_{B}, V_{C}) 151, 153, and 155 that are connected to a load 107. In the illustrated embodiment, switching devices 104 are disposed between the voltage sources 151, 153, and 155 and the load 107. Each current sensing device 102 is connected to a corresponding current sensing circuit 106 that may include, for example a bridge rectifier portion (not shown) and associated circuit components. The system 100 may include signal conditioning and analog to digital converter portions 108. A logic or processing portion 110 is communicatively connected to the current sensing devices 102 and is operative to receive a signal from each current sensing device 102 indicative of the sensed current in each of the lines 101, 103, and 105. The logic or processor portion (processor) 110 may include for example, a digital or analog circuit with level detection and filtering portions or integrated circuit processor capable of performing logic functions. The processor 110 in the illustrated embodiment is communicatively connected to the switching devices 104 and may be operative to actuate or open the switching devices 104. The processor 110 is communicatively connected to an indicator or display device 112 that is operative to present an indication, such as a textual, non-textual, or audio indication to a user. Though the illustrated embodiment includes an arrangement of three phases, alternate embodiments may include a similar arrangement with any number of phases.

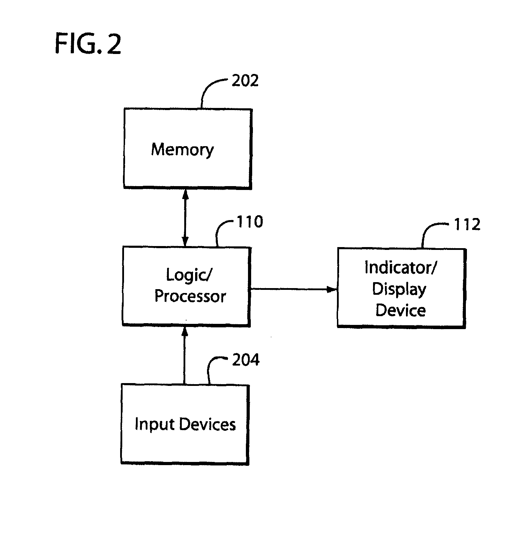

FIG. 2 illustrates an exemplary block diagram of the processor portion 110 and associated components such as, for example, a memory portion 202 and input devices 204 that may be communicatively connected to the processor portion 110.

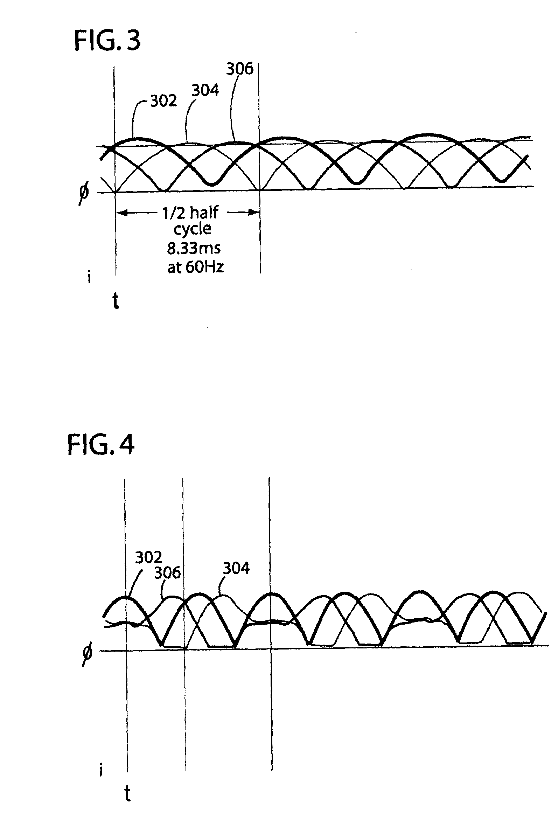

The operation of the system 100 is explained in further detail below. In this regard, FIG. 3 includes a graph illustrating an example of the sensed currents (i_{A}, 302; i_{B}, 304; and i_{C} 306) over time (t) of each of the phases during normal operation. Over each half cycle, the each of the sensed currents (i) reaches zero, which indicates that the system 100 is operating properly (i.e., there are no shorts between the phases.

FIG. 4 includes a graph illustrating an example of the sensed currents where a short is detected between the lines 103 and 105 (see FIG. 1, short represented by line 120) while current is flowing in each of the phases. In this regard, the sensed currents i_{B}, 304 and ic 306 fail to reach zero during each half cycle, indicating a short between the B and C phases.

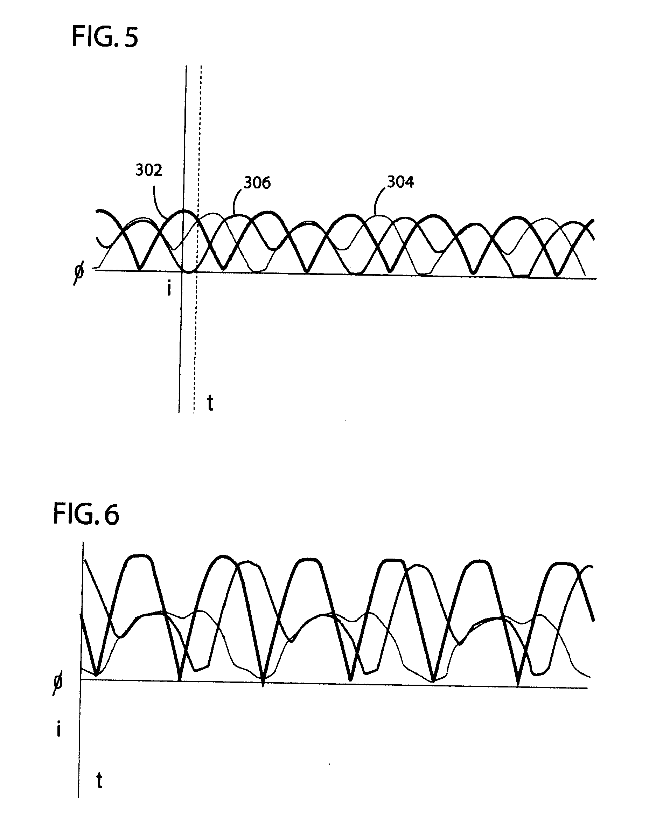

FIG. 5 includes a graph illustrating an example of the sensed currents where a short is detected between the lines 103 and 105 (see FIG. 1, short represented by line 120) while current is flowing in each of the phases and the polarities of the lines 103 and 105 are dissimilar. Again, the sensed currents i_{B}, 304 and i_{C} 306 fail to reach zero during each half cycle, indicating a short between the B and C phases.

FIG. 6 includes a graph illustrating an example of the sensed currents where a short is detected between the lines 103 and 105 (see FIG. 1, short represented by line 120) while current is flowing in each of the phases and the current in phase B (i_{B}) 304 is half of the measured current in the other phases. The sensed currents i_{B}, 304 and i_{C} 306 fail to reach zero during each half cycle, indicating a short between the B and C phases.

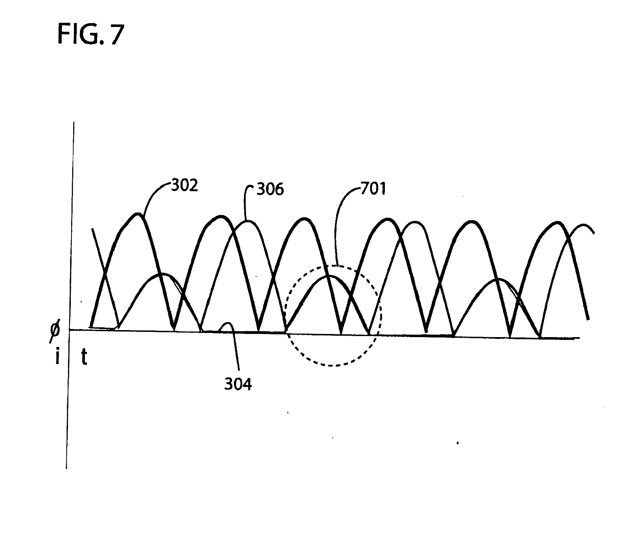

FIG. 7 includes a graph illustrating an example of the sensed currents where a short is detected between the lines 103 and 105 (see FIG. 1, short represented by line 120) while current (from the voltage source V_{B}) is not flowing through the line 103. During the half cycle, the sensed currents 304 and 306 are the same in the region 710, which indicates a short between the phases B and C.

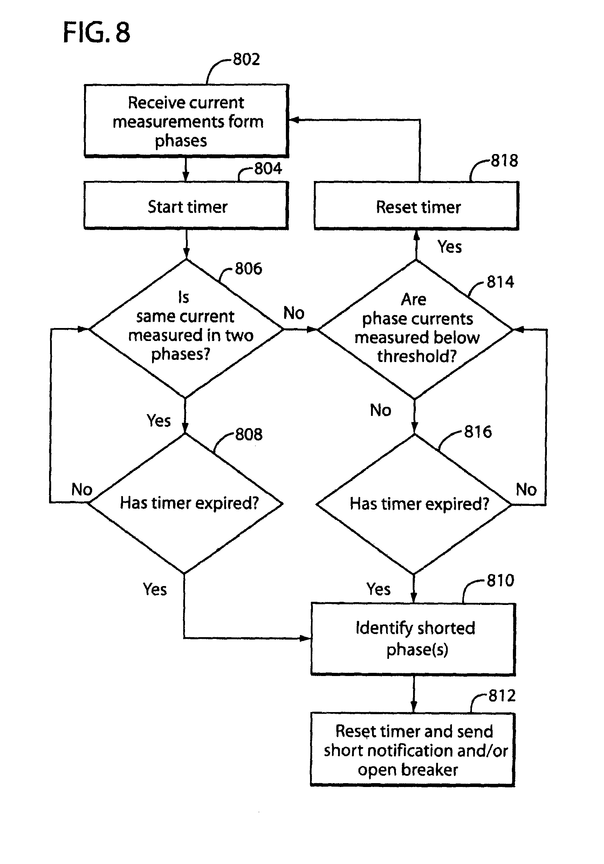

FIG. 8 illustrates a block diagram of an exemplary method for operating the system 100 (of FIG. 1). In block 802, the currents from each phase line are measured and received. A timer (that may be located in, for example, the processor 110) is started in block 804. In block 806, the logic determines whether the same current is measured in two or more phases. If yes, the logic determines whether the timer has expired in block 808. If yes, the shorted phases are identified in block 810. For example, if the same current is measured in two or more phases, the phases with the same measured current are identified as the shorted phases. In block 812, the timer may be reset, and a notification or indication of the short is output. The processor 110 may actuate or open the switching devices 104 (of FIG. 1) if desired. If the same current is not measured in block 806, in block 814, the currents are compared with a threshold current value (e.g., approximately or equal to zero). If one or more of the currents does not reach or dip below the threshold value, and the timer has not expired in block 816, the shorted phases are identified in block 818 as being the phases that fail to reach below the threshold value. The timer is reset and a short notification and/or actuation of the switching device may be performed in block 812. In block 814, if all of the currents reach the threshold current value, the timer is reset in block 818.

Block 810 includes identifying the shorted phase(s) if detected. In this regard, the logic may determine which measured currents are indicative of a short between the phases. If more than one measured current indicates a short, the associated phases may be identified as the shorted phases as discussed above in FIGS. 3-7.

The technical effects and benefits of the illustrated embodiments include a method and system that is operative to detect shorts between phases in a circuit protection device by sensing and analyzing measured currents in each of the phases of the device and outputting an indication and/or opening the circuit breaker contacts responsive to sensing a short.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A circuit protection system comprising:
   a first current sensing device operative to measure a current of a first phase of a voltage source;
   a second current sensing device operative to measure a current of a second phase of the voltage source; and
   a logic portion communicatively connected to the first current sensing device and the second current sensing device, the logic portion operative to receive measured currents from the first current sensing device and the second current sensing device, determine whether the measured current of the first phase is less than a threshold current value during a time period, and output an indication that a short exists in the first phase of the voltage source responsive to determining that the measured current of the first phase is not a value less than the threshold current value during the time period.
2. The system of clause 1, wherein the logic portion is further operative to output an indication that a short exists in the first phase and the second phase of the voltage source responsive to determining that the measured current of the first phase of the voltage source and the measured current of the second phase of the voltage source is not less than the threshold current value during the time period.
3. The system of clause 1 or clause 2, wherein the logic portion is further operative to output an indication that a short exists in the second phase of the voltage source responsive to determining that the measured current of the second phase of the voltage source is not less than the threshold current value during the time period.
4. The system of any preceding clause, wherein the logic portion is further operative to determine whether the measured current of the first phase of the voltage source is equal to the measured current of the second phase of the voltage source, and to output an indication that a short exists between the first phase and the second phase of the voltage source responsive to determining that the measured current of the first phase of the voltage source is equal to the measured current of the second phase of the voltage source.
5. The system of any preceding clause, wherein the logic portion includes a timer portion operative to measure the time period.
6. The system of any preceding clause, wherein the system includes a switching portion operative to disconnect the first phase of the voltage source from a load.
7. The system of any preceding clause, wherein the switching portion is further operative to disconnect the second phase of the voltage source from the load.
8. The system of any preceding clause, wherein the logic portion is communicatively connected to the switching portion and operative to actuate the switching portion responsive to outputting the indication that a short exists between the first phase of the voltage source and the second phase of the voltage source.
9. The system of any preceding clause, wherein the first current sensing device includes a Rogowski coil device.
10. The system of any preceding clause, wherein the first current sensing device includes a current transformer device.
11. A method for operating a circuit protection device, the method comprising:
   receiving a measured current of a first phase of a voltage source over a time period;
   determining whether the measured current of the first phase of the voltage source is less than a threshold value during the time period;
   outputting an indication that the first phase of the voltage source is shorted responsive to determining that the measured current of the first phase of the voltage source is not less than the threshold value during the time period.
12. The method of any preceding clause, wherein the method further includes:
   receiving a measured current of a second phase of the voltage source over the time period;
   determining whether the measured current of the second phase of the voltage source is less than a threshold value during the time period;
   outputting an indication that the second phase of the voltage source is shorted responsive to determining that the measured current of the second phase of the voltage source is not less than the threshold value during the time period.
13. The method of any preceding clause, wherein the method further includes:
   determining whether the measured current of both the first phase of the voltage source and the second phase of the voltage source is less than a threshold value during the time period; and
   outputting an indication that the first phase of the voltage source is shorted to the second phase of the voltage source responsive to determining that the measured current of both the first phase of the voltage source and the second phase of the voltage source is not less than a threshold value during the time period.
14. The method of any preceding clause, wherein the method further includes:
   receiving a measured current of a second phase of the voltage source over the time period;
   determining whether the measured current of the first phase of the voltage source equals the measured current of the second phase of the voltage source over the time period;
   outputting an indication that the first phase of the voltage source is shorted to the second phase of the voltage source responsive to determining that the measured current of the first phase of the voltage source equals the measured current of the second phase of the voltage source over the time period.
15. The method of any preceding clause, wherein the method further includes disconnecting the first phase of the voltage source from a load responsive to outputting the indication that the first phase of the voltage source is shorted.
16. The method of any preceding clause, wherein the method further includes disconnecting the second phase of the voltage source from a load responsive to outputting an indication that the second phase of the voltage source is shorted.
17. The method of any preceding clause, wherein the method further includes disconnecting the first phase of the voltage source and the second phase of the voltage source from a load responsive outputting the indication that the first phase of the voltage source is shorted to the second phase of the voltage source.
18. The method of any preceding clause, wherein the method further includes disconnecting the first phase of the voltage source and the second phase of the voltage source from a load responsive outputting the indication that the first phase of the voltage source is shorted to the second phase of the voltage source.
19. The method of any preceding clause, wherein the method is performed by a logic portion.
20. The method of any preceding clause, wherein the indication includes a visual indicator output to a user.

## Claims

1. A circuit protection system comprising:
a first current sensing device (102) operative to measure a current of a first phase of a voltage source (151);
a second current sensing device (102) operative to measure a current of a second phase of the voltage source (153); and
a logic portion (110) communicatively connected to the first current sensing device (102) and the second current sensing device (102), the logic portion (110) operative to receive measured currents from the first current sensing device (102) and the second current sensing device (102), determine whether the measured current of the first phase (151) is less than a threshold current value during a time period, and output an indication that a short exists in the first phase of the voltage source (151) responsive to determining that the measured current of the first phase (151) is not a value less than the threshold current value during the time period.

2. The system of claim 1, wherein the logic portion (110) is further operative to output an indication that a short exists in the first phase (151) and the second phase (153) of the voltage source responsive to determining that the measured current of the first phase (151) of the voltage source and the measured current of the second phase (153) of the voltage source is not less than the threshold current value during the time period.

3. The system of claim 1 or claim 2, wherein the logic portion (110) is further operative to output an indication that a short exists in the second phase (153) of the voltage source responsive to determining that the measured current of the second phase of the voltage source (153) is not less than the threshold current value during the time period.

4. The system of any preceding claim, wherein the logic portion (110) is further operative to determine whether the measured current of the first phase of the voltage source (151) is equal to the measured current of the second phase of the voltage source (153), and to output an indication that a short exists between the first phase (151) and the second phase (153) of the voltage source responsive to determining that the measured current of the first phase of the voltage source (151) is equal to the measured current of the second phase of the voltage source (153).

5. The system of any preceding claim, wherein the logic portion (110) includes a timer portion operative to measure the time period.

6. The system of any preceding claim, wherein the system includes a switching portion (104) operative to disconnect the first phase (151) of the voltage source from a load (107).

7. The system of any preceding claim, wherein the switching portion (104) is further operative to disconnect the second phase (153) of the voltage source from the load (107).

8. The system of any preceding claim, wherein the logic portion (110) is communicatively connected to the switching portion (104) and operative to actuate the switching portion (104) responsive to outputting the indication that a short exists between the first phase of the voltage source (151) and the second phase of the voltage source (153).

9. The system of any preceding claim, wherein the first current sensing device (102) includes a Rogowski coil device.

10. The system of any preceding claim, wherein the first current sensing device (102) includes a current transformer device.

11. A method for operating a circuit protection device, the method comprising:
receiving a measured current of a first phase of a voltage source over a time period;
determining whether the measured current of the first phase of the voltage source is less than a threshold value during the time period;
outputting an indication that the first phase of the voltage source is shorted responsive to determining that the measured current of the first phase of the voltage source is not less than the threshold value during the time period.

12. The method of claim 11, wherein the method further includes:
receiving a measured current of a second phase of the voltage source over the time period;
determining whether the measured current of the second phase of the voltage source is less than a threshold value during the time period;
outputting an indication that the second phase of the voltage source is shorted responsive to determining that the measured current of the second phase of the voltage source is not less than the threshold value during the time period.

13. The method of claim 11 or claim 12, wherein the method further includes:
determining whether the measured current of both the first phase of the voltage source and the second phase of the voltage source is less than a threshold value during the time period; and
outputting an indication that the first phase of the voltage source is shorted to the second phase of the voltage source responsive to determining that the measured current of both the first phase of the voltage source and the second phase of the voltage source is not less than a threshold value during the time period.

14. The method of any of claim 11 to 13, wherein the method further includes:
receiving a measured current of a second phase of the voltage source over the time period;
determining whether the measured current of the first phase of the voltage source equals the measured current of the second phase of the voltage source over the time period;
outputting an indication that the first phase of the voltage source is shorted to the second phase of the voltage source responsive to determining that the measured current of the first phase of the voltage source equals the measured current of the second phase of the voltage source over the time period.

15. The method of any of claims 11 to 14, wherein the method further includes disconnecting the first phase of the voltage source from a load responsive to outputting the indication that the first phase of the voltage source is shorted.
